# FASCICULE DE BREVET EUROPEEN

(11) **EP 2 883 005 B1**
(45) Date de publication et mention de la délivrance du brevet: **17.05.2017**
(21) Numéro de dépôt: 13747375.7
(22) Date de dépôt: 05.08.2013
(51) Int. Cl.: F24H 1/12, H05B 6/42, F24D 19/10, F24H 1/18, F24H 9/20

(54) **ENSEMBLE FORMÉ D'UN CHAUFFE-EAU COMPORTANT UN CORPS DE CHAUFFE COMPRENANT UN VOLUME D'EAU ET D'AU MOINS UN GÉNÉRATEUR D'UN MODULE INDUCTIF DÉDIÉ À UN APPAREIL ÉLECTRIQUE**
ANORDNUNG AUS EINEM WASSERERHITZER MIT EINEM EINE WASSERMENGE UMFASSENDEN ERHITZER UND AUS WENIGSTENS EINEM GENERATOR EINES FÜR EIN ELEKTRISCHES GERÄT GEWIDMETEN INDUKTIVMODULES
ASSEMBLY COMPOSED OF A WATER HEATER COMPRISING A HEATER COMPRISING A WATER VOLUME AND OF AT LEAST ONE GENERATOR FOR AN INDUCTIVE MODULE FOR AN ELECTRIC APPARATUS

(30) Priorité: 13.08.2012 FR 1257789
(43) Date de publication de la demande: 17.06.2015
(73) Titulaire: Winslim, 1630 Luxembourg (LU)
(72) Inventeur: GASPARD, Jean-Yves, F-69400 Gleize (FR)
(74) Mandataire: Decobert, Jean-Pascal
(86) Numéro de dépôt international: PCT/EP2013/066428
(87) Numéro de publication internationale: WO 2014/026879

(56) Documents cités:
- WO-A2-2009/137895
- DE-A1-102009 038 669

## Description

La présente invention concerne un ensemble formé d'un chauffe-eau comportant un corps de chauffe destiné à contenir un volume d'eau et d'au moins un générateur d'un module inductif dédié à un appareil électrique et un procédé de refroidissement dudit générateur.

Dans ce qui suit, il est entendu par chauffe-eau un appareil à accumulation d'eau qui possède au moins une cuve servant de corps de chauffe de stockage d'eau chaude, dite aussi fréquemment ballon. Le chauffe-eau selon l'invention s'entend également comme un appareil à chauffage instantané. La cuve étant la zone où l'eau est chauffée. La capacité de cette cuve est plus ou moins importante suivant les besoins auxquels les appareils sont dédiés, par exemple en étant associés avec un ou des robinets de lavabo, une douche et/ou une baignoire, etc. Le document DE102009038669 décrit un ensemble comprenant un chauffe-eau comportant un corps de chauffe destiné à contenir un volume d'eau, comprenant un conduit d'arrivée d'eau à chauffer et un conduit de sortie d'eau chauffée, l'ensemble comprend un appareil électrique chauffant, et des moyens d'échange de chaleur entre ledit appareil électrique chauffant et une zone de passage de l'eau dans le corps de chauffe.

Il décrit aussi un procédé de refroidissement d'un appareil électrique chauffant, ledit procédé comprenant une étape d'échange de chaleur entre une zone de passage d'eau dans le corps de chauffe d'un chauffe-eau et ledit appareil électrique chauffant, cette étape contribuant au refroidissement dudit appareil électrique chauffant tout en permettant un chauffage d'appoint de l'eau de la zone de passage dans ou vers le corps de chauffe du chauffe-eau. De manière connue, un chauffe-eau électrique possède un élément chauffant immergé dans la cuve servant de corps de chauffe permettant de chauffer l'eau qu'il contient. Cet élément chauffant est fréquemment une résistance, dite généralement "résistance blindée" présentant une taille modeste et disposant, en raison de sa technologie, d'une surface d'échange avec l'eau particulièrement faible. De ce fait, la puissance de la résistance blindée n'est pas très importante pour éviter soit que la résistance blindée ne provoque des ébullitions locales, soit que la résistance blindée ne s'endommage dans le cas où, recouverte de tartre, elle n'échange plus correctement son énergie avec l'eau à chauffer.

Le calcaire est quasiment partout présent en suspension dans l'eau et lorsque l'eau contenue dans la cuve servant de corps de chauffe est chauffée, l'agitation moléculaire va provoquer la précipitation du calcaire ou entartrage sur la résistance blindée et généralement sur les parties chaudes dont la tuyauterie du chauffe-eau. L'entartrage est un problème majeur sur les chauffe-eaux car suivant les caractéristiques de l'eau, chauffes après chauffes, l'élément chauffant se recouvre de tartre. Ceci a pour effet, d'une part, de réduire l'échange thermique avec l'eau et, d'autre part, de réduire la durée de vie de l'élément chauffant qui surchauffe et finit par se détruire. Le tartre déposé réduit le transfert de chaleur à l'eau, l'élément chauffant surchauffe. Si l'élément chauffant est très entartré, le transfert thermique à l'eau devient difficile et l'eau n'est pas chauffée correctement car soit le thermostat arrête la chauffe avant que la température de consigne de chauffage de l'eau ne soit atteinte de sorte à protéger l'élément chauffant qui risque d'être détérioré, soit le thermostat ne perçoit pas la surchauffe de l'élément chauffant qui poursuit la chauffe et est alors détérioré.

Il s'ensuit que les chauffe-eaux à au moins un élément de chauffage sous la forme d'une résistance n'ont pas des rendements très satisfaisants. De plus, ces éléments de chauffage sont uniquement régulés par un thermostat et fonctionnent dans un mode tout ou rien, ce qui n'est pas compatible avec les nouvelles technologies de production d'électricité ou d'installations domotiques et leur association avec des installations domotiques est inadéquate.

Cette incompatibilité est particulièrement désavantageuse du fait de l'avènement des énergies vertes et de l'utilisation de plus en plus répandue de systèmes intelligents de gestion de l'énergie

La problématique des énergies vertes du type éolienne ou cellule photovoltaïque est la difficulté de faire correspondre la production et l'utilisation de l'électricité. Une éolienne produira par temps venteux, une cellule photovoltaïque par temps ensoleillé. Il est impossible de faire correspondre le besoin et la production dans ces conditions. La solution consiste à stocker l'énergie, sous forme électrique, dans des batteries par exemple, ou sous forme d'eau chaude dans des chauffe-eaux.

Un problème à la base de la présente invention est de proposer un chauffe-eau dont la consommation électrique est optimisée.

Pour atteindre cet objectif, il est prévu selon un aspect de l'invention un ensemble selon la revendication 1.

L'effet technique obtenu est d'utiliser l'eau du chauffe-eau pour le refroidissement du générateur de puissance. Un tel chauffe-eau se prêtant particulièrement bien aux échanges thermiques par la quantité d'eau qu'il contient ou qui lui est amenée, les calories ainsi récupérées pour le refroidissement du générateur étant en outre utilisées pour améliorer le chauffage de l'eau contenue dans le chauffe-eau. Le différentiel de température entre l'eau relativement froide à chauffer et le générateur est alors important d'où un échange thermique efficace. Les pertes de chaleur du générateur sont transmises à l'eau, ainsi récupérées pour effectuer un chauffage d'appoint de l'eau contenue dans le chauffe-eau.

Sans être limitatif, selon un mode de réalisation de l'invention, le dispositif inductif est dédié au chauffage de l'eau du chauffe-eau. Dans ce cas le rendement est encore grandement amélioré.

L'emploi de dispositifs de chauffage par induction s'est développé récemment pour le chauffage de plaques de cuisson. Ce type de dispositif de chauffage ne s'est cependant pas généralisé aux chauffe-eaux, ceci pour plusieurs raisons.

La première raison concerne l'immersion du dispositif de chauffage par induction dans la cuve. En effet, un tel dispositif de chauffage par induction est plus sophistiqué qu'une résistance chauffante en comprenant des éléments électroniques par exemple un générateur de puissance et des bobinages tel que un module inductif qui doivent être parfaitement isolés électriquement de l'eau contenue dans la cuve. Dans un cas de l'invention, l'inducteur est immergé dans l'eau. Ainsi, on plonge l'inducteur et la charge et ils sont donc en contact avec l'eau présente dans le corps de chauffe. De manière avantageuse, un espace intermédiaire entre inducteur et charge permet la présence d'eau entre ces deux composants. L'immersion du dispositif inductif dans le corps de chauffe du chauffe-eau pose plus de problème que l'immersion d'une résistance chauffante. Il existe donc un fort préjugé dans l'état de l'art contre l'immersion d'un dispositif de chauffage par induction dans un corps de chauffe d'un chauffe-eau. L'invention n'impose cependant pas que l'inducteur soit immergé.

En plus un dispositif inductif nécessite un générateur de puissance dont le rôle est de transformer le courant basse fréquence du secteur d'alimentation en haute fréquence. Ce générateur comprend des composants électroniques émettant de la chaleur, ces pertes nécessitent souvent une ventilation du générateur difficilement compatibles avec le coût et l'utilisation de ces dispositifs qui deviennent alors bruyants, ce qui est un second inconvénient. Il est ainsi nécessaire dans bien des cas de refroidir, par un dissipateur et une ventilation forcée, les composants électroniques dits de puissance du générateur.

Ceci vaut particulièrement pour un dispositif de chauffage par induction d'un chauffe-eau, ledit chauffe-eau étant fréquemment encastré dans un espace limité fermé et peu ventilé comme un placard, un réduit ou un coffre. Dans sa démarche pour limiter les pertes d'un dispositif de chauffage par induction d'un chauffe-eau ainsi que pour assurer le dégagement de chaleur produite par les composants du générateur lors de son fonctionnement, le demandeur de la présente demande a pris conscience que ceci est extrapolable pour tout dispositif inductif domestique présent dans les environs du chauffe-eau.

L'ensemble selon l'invention pourra en outre présenter au moins facultativement l'une quelconque des caractéristiques suivantes :
- le générateur de puissance est agencé à distance de la partie restante du module inductif et à proximité du chauffe-eau, avantageusement ledit générateur étant logé dans un boîtier de réception, ce qui l'isole électriquement et préférentiellement le rend étanche.
- les moyens d'échange de chaleur sont agencés au niveau du conduit d'arrivée d'eau à chauffer au corps de chauffe. Avec de l'eau froide, le différentiel de température entre générateur et eau est élevé, ce qui procure un meilleur échange de chaleur.
- la zone de passage de l'eau permettant l'échange thermique avec les moyens d'échange est agencée comme un circuit de circulation d'eau en direction du corps de chauffe.
- les moyens d'échange comprennent une enveloppe liée au générateur de
   puissance et coopérant, par exemple entourant, le circuit de circulation.
- il comprend un circuit complémentaire parcourant le générateur de puissance et agencé en dérivation la portion du conduit d'arrivée d'eau à chauffer.
- les moyens d'échange de chaleur comprennent un manchon avantageusement solidaire du boîtier de réception et entourant ou constituant une portion dudit conduit d'arrivée d'eau à chauffer. Ainsi, les moyens d'échange de chaleur sont intégrés dans le boîtier, ce qui améliore l'échange thermique.
- l'ensemble comprend des moyens d'échange de chaleur, le générateur, plus précisément un dissipateur, étant accolé au corps de chauffe sur une zone non isolée thermiquement, l'échangeur de chaleur étant agencé entre la partie extérieure du corps de chauffe accolée au générateur. L'échange de chaleur ainsi obtenu, bien que moins effectif que le précédent, a le mérite de ne pas impliquer d'adaptation spécifique pour le générateur. Ces moyens d'échange de chaleur peuvent être utilisés en complément des ou en alternative aux précédents moyens d'échange de chaleur mentionnés.
- les moyens d'échange de chaleur avec la zone de passage de l'eau dans le corps de chauffe comprennent une zone non isolée thermiquement du corps de chauffe à laquelle le générateur est accolé.
- le chauffe-eau comprend une trappe pour l'introduction de moyens de chauffage de l'eau dans son corps de chauffe, ladite trappe étant fermée par une plaque de fermeture, ladite plaque de fermeture étant une zone non isolée thermiquement, avantageusement de la partie extérieure, du corps de chauffe à laquelle est accolée au générateur.
- les moyens d'échange de chaleur avec la zone de passage de l'eau dans le corps de chauffe comprennent un boîtier de réception du générateur, plus précisément le dissipateur, plongé dans le corps de chauffe du chauffe-eau.
- le générateur présente une interface équipée de moyens de communication permettant le contrôle à distance des paramètres de chauffage tels que la puissance, le temps de chauffage, le déclenchement ou l'arrêt du chauffage par exemple suivant différents paramètres dont par exemple la disponibilité d'énergies vertes. Ainsi, il est obtenu une commande d'au moins une partie des appareils électriques présents pour une meilleure consommation d'énergie.
- ledit au moins un générateur comporte au moins deux sorties électriques, chacune pour un module inductif dédié à un appareil électrique. Ledit générateur est commun à au moins deux appareils électriques. Ceci représente un gain de place ainsi qu'une diminution de coût pour les deux appareils électriques.
- il est prévu au moins deux générateurs, chaque générateur étant dédié à un appareil électrique spécifique. Ainsi, les générateurs d'une pluralité d'appareils électriques peuvent être refroidis par un chauffe-eau, refroidissement efficace qui peut aussi servir à augmenter le nombre de calories récupérées pour le chauffage d'appoint du chauffe-eau.
- le générateur est configuré pour permettre l'alimentation alternative des modules inductifs auxquels il est lié.
- le générateur est configuré pour permettre l'alimentation simultanée et totale des modules inductifs auxquels il est lié.
- l'ensemble comprend une pluralité de canaux longitudinaux juxtaposés et connectés fluidiquement entre eux, au moins un canal longitudinal recevant un module inductif du dispositif de chauffage par induction
- le corps de chauffe est parallélépipédique préférentiellement rectangle.
- le corps de chauffe a une contenance supérieure à 10 litres et préférentiellement 20 litres.

L'invention concerne aussi un procédé de refroidissement d'au moins un générateur de puissance d'un dispositif inductif, selon la revendication 13.

Ainsi, l'étape de refroidissement d'un générateur se fait sans participation d'un système de refroidissement évacuant l'énergie dans l'environnement mais avec récupération d'énergie par le chauffage d'appoint du chauffe-eau. Ceci est possible car les composants de puissance utilisés dans le générateur 7 peuvent fonctionner à 175°C au niveau du silicium, soit 120°C au niveau du dissipateur sur lequel ils sont fixés. Même si l'eau est à 60-70°C, elle reste inférieure à une température maximum du dissipateur avec un différentiel de 50-60°C rendant possible un échange thermique efficace par simple contact du dissipateur et de l'eau.

Avantageusement, ledit générateur étant commun au dispositif de chauffage par induction du chauffe-eau et à un autre appareil électrique, il est effectué une étape de pilotage des paramètres du chauffage par induction du chauffe-eau selon les conditions de fonctionnement en temps réel ou estimées de l'autre appareil électrique.

Ceci contribue au contrôle et à la coordination de la consommation électrique de divers appareils électriques par un dispositif de gestion centrale des consommations prévu pour l'appartement ou le bâtiment concerné dans lequel se trouvent lesdits appareils.

Un autre aspect séparable de l'invention est un ensemble comprenant un chauffe-eau comportant un corps de chauffe destiné à contenir un volume d'eau, comprenant un conduit d'arrivée d'eau à chauffer et un conduit de sortie d'eau chauffée tel que l'ensemble comprend au moins un générateur de puissance, et une pluralité de modules inductifs configuré pour produire chacun un courant induit dans un élément conducteur d'électricité, le générateur de puissance alimentant chacun des modules inductifs. On mutualise ainsi le générateur de puissance. Au moins un des modules inductifs peut par exemple être choisi parmi : un module de chauffage de l'eau du chauffe-eau, un module de chauffage de plaque(s) de cuisson à induction, un module de recharge sans contact de batteries. Cet aspect de l'invention peut se combiner avec tout autre aspect de l'invention, notamment les moyens d'échange de chaleur. Les appareils électriques peuvent être distants les uns des autres tout comme le générateur peut être distants des appareils et/ou du chauffe-eau.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une coupe longitudinale d'une forme de réalisation d'une partie d'un ensemble selon la présente invention, le chauffe-eau étant plat en étant muni d'un dispositif de chauffage par induction, il est cependant à garder à l'esprit que le refroidissement d'un générateur 7 de puissance peut se faire avec d'autres formes de chauffe-eau qu'un chauffe-eau plat,
- la figure 2 est une représentation schématique d'une vue de face de l'ensemble selon un mode de réalisation de l'invention, le chauffe-eau étant plat en étant muni d'un dispositif de chauffage par induction,
- la figure 3 est une représentation schématique d'une coupe longitudinale en perspective d'une forme de réalisation d'un ensemble selon la présente invention, le chauffe-eau étant plat en étant muni d'un dispositif de chauffage par induction,

- la figure 4 est une représentation schématique d'une vue longitudinale en perspective d'une forme de réalisation d'un module inductif avec une bobine de forme oblongue et une plaque de charge sensiblement de forme rectangulaire selon la présente invention,
- la figure 5 est une représentation schématique d'une vue en perspective d'un module inductif selon la figure 4 avec deux plaques de charges.

Dans ce qui va suivre, il va être pris comme exemple de dispositif inductif un dispositif servant au chauffage de l'eau contenue dans un chauffe-eau. Bien que ceci soit une application préférentielle de la présente invention, cette application n'est pas limitative et la présente invention concerne n'importe quel dispositif inductif domestique, que ce soit pour le chauffage d'un appareil domestique ou une autre fonction.

Un tel dispositif inductif peut être, par exemple, un dispositif de chauffage pour des plaques de cuisson ou un four. Il peut être aussi un dispositif inductif pour la charge de la ou des batteries d'un véhicule automobile, notamment un véhicule hybride ou tout électrique.

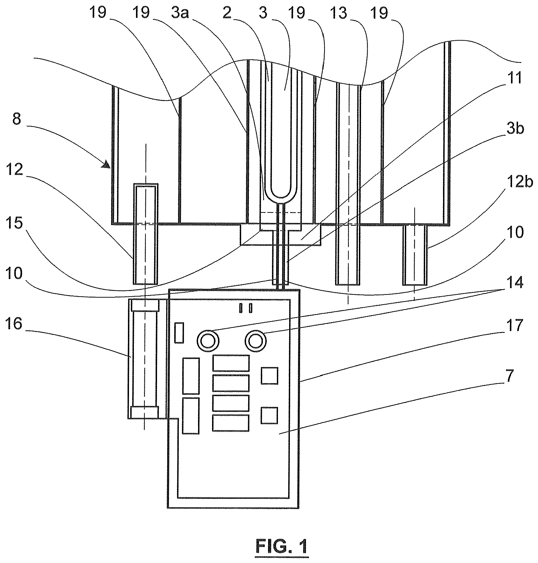

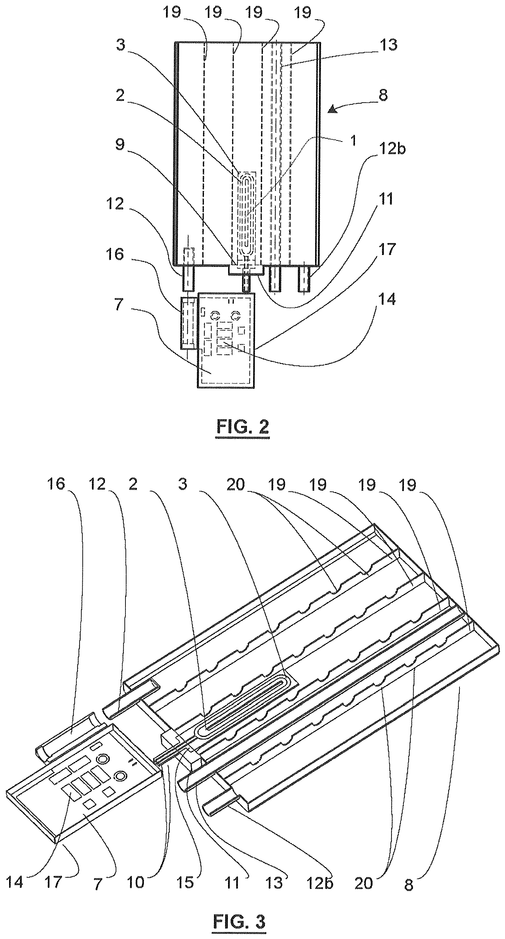

Le chauffe-eau illustré aux figures 1 à 3 comprend un corps de chauffe destiné à recevoir un volume d'eau, un conduit d'arrivée d'eau à chauffer 12, un conduit de sortie d'eau chauffée 13 et avantageusement un conduit 12b de purge destiné à permettre le vidage complet du corps de chauffe. Avantageusement, le chauffe-eau est du type à accumulation, c'est-à-dire que l'eau n'est pas en circulation dynamique. Le chauffe-eau dispose alors de phases de chauffe et de phase de soutirage d'eau qui sont généralement différentes et non liées. Le conduit d'arrivé d'eau à chauffer 12 débouche avantageusement dans la partie inférieure du corps de chauffe, préférentiellement à proximité du module inductif permettant le chauffage de l'eau. Le conduit de sortie d'eau chauffer 13 permet avantageusement de capter l'eau en partie supérieure du corps de chauffe.

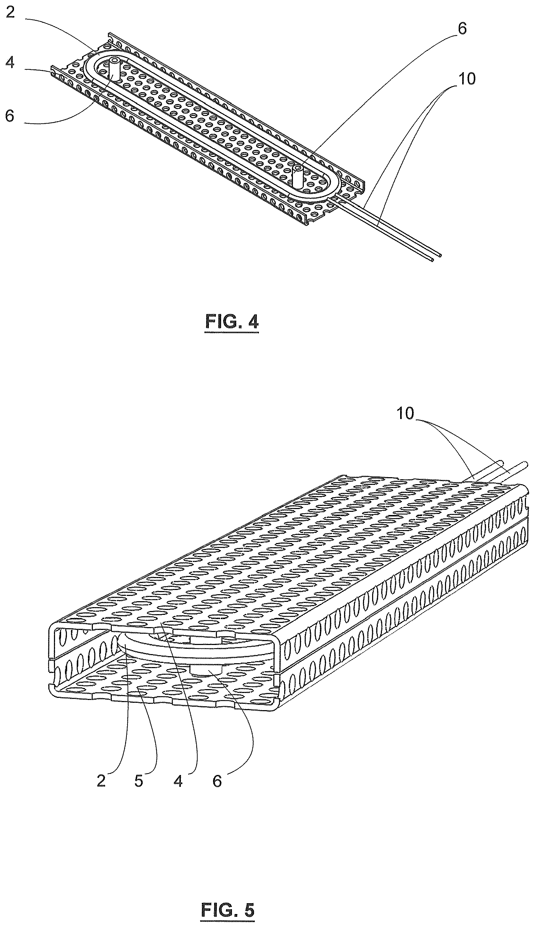

D'une manière générale, en se référant aux figures 1 à 5, il est rappelé qu'un dispositif 1 inductif utilise un générateur de puissance 7 dont le rôle est de transformer le courant basse fréquence du secteur d'alimentation, généralement 50-60 HZ, en haute fréquence. Ce courant sert à alimenter un inducteur 2 sous forme d'au moins une bobine d'induction constituée principalement d'un bobinage conducteur, accessoirement de circuits magnétiques, d'isolants électriques et thermiques.

Le générateur de puissance 7 comprend un circuit imprimé sur lequel sont assemblés différents composants dont des composants de puissance dont les pertes sont émises sous forme de la chaleur. Ces composants de puissance sont fixés thermiquement à un dissipateur préférentiellement en aluminium. Ce dissipateur est configuré pour dissiper la chaleur émise des composants de puissance de sorte à éviter leur surchauffe. Le générateur 7 peut être logé dans un boitier de réception 17 destiné à le protéger et/ou l'isoler électriquement et/ou l'isoler de l'eau. Le boîtier de réception 17 définit le contour externe du générateur et peut prendre par exemple une forme sensiblement rectangulaire ou bien encore circulaire.

La bobine 2 parcourue par le courant haute fréquence génère un champ magnétique à haute fréquence dans son environnement proche. La bobine 2 est avantageusement portée par un support 3.

Pour un dispositif de chauffage, un objet conducteur de l'électricité, fréquemment appelé charge 4, 5 et plongé dans ce champ variable, est parcouru par des courants induits, dits aussi courants de Foucault, qui vont provoquer son échauffement par effet Joule. Avantageusement, les charges 4, 5 sont sous la forme de plaques de charge entourant l'inducteur 2. Les plaques peuvent être deux plaques distinctes disposées symétriquement par rapport au plan de l'inducteur2 ou bien une pièce unique pliée de sorte à former deux charges symétriques relativement au plan de l'inducteur 2..Les plaques de charge 4, 5 sont maintenues à distance de l'inducteur 2 par des espaceurs 6, avantageusement isolants électriques, par exemple répartis aux quatre coins des plaques 4, 5 de forme avantageusement rectangulaire ou bien en position centrale des plaques 4, 5.

L'ensemble de l'inducteur 2 sous forme d'au moins une bobine et d'au moins une charge 4, 5 sous forme avantageusement d'une plaque magnétique est appelé module inductif.

Les plaques de charges 4, 5 sont avantageusement fixées au support 3 préférentiellement par les espaceurs 6.

Un dispositif 1 inductif, notamment un dispositif de chauffage, subit des pertes qui peuvent représenter 5 % de la puissance transmise, voire plus si le bobinage de la bobine 2 est réalisé sous des contraintes économiques fortes. Ces pertes nécessitent souvent une ventilation du dispositif 1 par induction et principalement de son générateur de puissance 7 et de son inducteur 2 sous forme d'une bobine. Ceci rend prohibitif le coût d'un tel dispositif 1 s'il est placé à l'extérieur de son appareil associé, ici le chauffe-eau 8 pour le chauffage de l'eau contenue dans le corps de chauffe, en rendant l'utilisation du dispositif 1 bruyante.

Il est aussi nécessaire dans bien des cas de refroidir, par un dissipateur et une ventilation forcée, les composants électroniques dits de puissance du générateur 7 du dispositif 1 par induction. Ceux-ci ont aussi un niveau de perte non négligeable qui contribue à faire baisser le rendement du dispositif 1 par induction.

Conformément à la présente invention, il est prévu de refroidir un générateur de puissance d'au moins un dispositif inductif par l'utilisation de l'eau d'un chauffe-eau, ledit dispositif inductif étant non spécifiquement dédié au chauffage du chauffe-eau bien que cela soit sa fonction préférentielle. Ainsi, le procédé de refroidissement d'un générateur de puissance d'un dispositif inductif configuré pour coopérer avec un chauffe-eau pour le refroidissement de son générateur de puissance est caractérisé par une étape d'échange de chaleur entre une zone de passage d'eau dans ou vers le corps de chauffe du chauffe-eau 8 et ledit au moins un générateur 7, cette étape contribuant au refroidissement dudit au moins un générateur 7 tout en permettant un chauffage d'appoint de l'eau contenue dans le corps de chauffe du chauffe-eau 8.

La zone de passage de l'eau peut être selon une possibilité, une zone de passage de l'eau contenue dans le corps de chauffe. La zone de passage de l'eau peut être selon une autre possibilité une zone de passage de l'eau non encore introduite dans le corps de chauffe. Il est aussi possible de combiner les deux modes de refroidissement. On entend par passage que l'eau en contact de la zone subit un effet de convection du fait de l'échange de chaleur et/ou une circulation du fait de l'arrivée d'eau dans le corps de chauffe. Plus spécifiquement, on peut parler de zone de présence d'eau, préférentiellement, il s'agit d'eau à chauffer c'est-à-dire à plus basse température que l'eau ayant été chauffée.

Ce dispositif inductif, dont le générateur 7, est refroidi par l'eau du chauffe-eau 8 est dédié au fonctionnement d'un ou de plusieurs appareils avantageusement localisés dans le voisinage du chauffe-eau 8.

Un dispositif inductif comprend selon une possibilité un générateur de puissance 7 commun à au moins deux modules inductifs pouvant être dédiés à un seul et même appareil ou bien à des appareils distincts.

Avantageusement, au moins un module inductif est dédié au chauffage du chauffe-eau 8, et comprend un inducteur 2 et au moins une charge 4, 5, et est avantageusement plongé dans le corps de chauffe du chauffe-eau 8.

Avantageusement, l'eau destinée à être chauffée par le chauffe-eau 8 effectue le refroidissement du générateur de puissance 7 du module inductif destiné au chauffe eau ainsi que d'au moins un autre module inductif.

Avantageusement, le dispositif 1 de chauffage par induction du chauffe-eau présente un générateur 7 de puissance commun avec celui d'un ou de plusieurs autres modules inductifs dédiés à un ou plusieurs appareils autres que le chauffe-eau 8.

Selon une autre possibilité, l'eau destinée à être chauffée par le chauffe eau effectue le refroidissement du générateur de puissance 7 du module inductif destiné au chauffe eau ainsi que d'au moins un autre générateur de puissance lié à au moins un autre module inductif dédié au chauffe eau ou à un autre appareil.

Selon un mode de réalisation, le générateur 7 comprend deux sorties électriques permettant une alimentation totale et simultanée des différents modules inductifs auquel il est relié. Selon un autre mode de réalisation, le générateur comprend deux sorties électriques permettant une alimentation alternative des différents modules inductifs auquel il est relié.

Cette disposition est particulièrement avantageuse en terme de puissance installée car l'installation électrique n'est alors pas calibrée que pour un générateur et non pas pour plusieurs générateurs ce qui pourrait dépasser l'ampérage des abonnement électriques classiques.

Selon une possibilité avantageuse, le chauffe-eau communique avec le compteur électrique pour optimiser l'énergie absorbée.

Comme dispositifs inductifs dont le générateur 7 de puissance est refroidi par le chauffe-eau 8, il est possible de citer, à titre d'exemples non limitatifs, plusieurs dispositifs, ces dispositifs concernant fréquemment, mais pas uniquement, le chauffage d'un ou plusieurs appareils.

Un premier groupe d'appareils électriques à induction et auxquels peut s'appliquer la présente invention peut être formé d'appareils tels qu'une ou des plaques de cuisson et/ou un four, la ou lesdites plaques et/ou le four se situant dans la cuisine, lieu dans lequel il n'est pas rare d'avoir un chauffe-eau 8 à proximité. Dans ce cas, il peut être prévu un générateur 7 de puissance pour chaque appareil ou un générateur 7 de puissance commun à tous les appareils, chaque générateur ou le générateur commun étant disposé près du chauffe-eau 8 et donc éloigné de la ou des plaques et/ou du four. Le module inductif, disposé à proximité de l'appareil à induction, présente alors avantageusement une épaisseur extrêmement réduite car sans générateur de puissance.

Ceci présente de nombreux avantages, par exemple celui de diminuer l'encombrement de l'appareil ou de chaque appareil, de ne pas nécessiter d'encastrement, d'augmenter la tenue thermique de l'ensemble appareil et module inductif en ne prévoyant pas de régulation du générateur 7 à l'emplacement de l'appareil. Avantageusement, dans le cas de tels appareils comme des plaques de cuisson et/ou un four, il est possible d'utiliser le même générateur 7 et même, le cas échéant, de le coupler avec le générateur 7 pour le chauffage par induction du chauffe-eau 8, ce qui d'une part, permet de réduire d'autant les coûts d'équipement et d'autre part, permet d'optimiser la puissance électrique installée.

En effet, le temps d'utilisation d'une plaque de cuisson ou d'un four reste faible, en moyenne entre 30 mn et 1 heure. Il est donc tout à fait possible d'utiliser le générateur 7 du chauffe-eau 8 pendant ce temps sans affecter le volume d'eau chaude, cette phase pouvant même être anticipée par apprentissage s'il est connu par un dispositif de gestion énergétique de tous les appareils présents dans l'appartement ou le bâtiment contenant lesdits appareils électriques que le chauffe-eau 8 a de grandes chances d'être utilisé dans ce créneau horaire.

Ainsi, avantageusement, le générateur 7 étant commun au dispositif 1 de chauffage inductif du chauffe-eau 8 et à un autre appareil électrique, il est effectué une étape de pilotage des paramètres du chauffage par induction du chauffe-eau 8 selon les conditions de fonctionnement en temps réel ou estimés de l'autre appareil électrique.

Un second groupe peut comprendre un dispositif de charge d'un véhicule électrique ou hybride, le garage, lieu de charge fréquent du véhicule, pouvant contenir un chauffe-eau 8. Par exemple, pour une charge par induction de 8 heures à 3.000 Watt, on peut utiliser un générateur 7 de puissance refroidi par le chauffe-eau 8, ce générateur 7 étant avantageusement doté de plusieurs sorties et pouvant servir par exemple au chauffage du chauffe-eau 8, sans que cela soit limitatif. Dans ce cas, il convient de gérer l'utilisation du générateur 7 entre le dispositif de charge et le dispositif 1 de chauffage, ces deux dispositifs nécessitant des temps longs de fonctionnement. Avec un rendement de l'électronique de charge de 95%, on pourrait théoriquement récupérer 150 W sur 8 heures soit 1.200 Wh pour chauffer l'eau du chauffe-eau 8, ce qui n'est pas insignifiant.

Un troisième groupe peut être formé par divers appareils électriques domestiques pouvant fonctionner par induction. Ces appareils peuvent être alimentés par un des générateurs 7 de puissance refroidis par le chauffe-eau 8, avantageusement par un seul générateur.

Divers modes de réalisation du refroidissement d'un générateur 7 de puissance, dans le cas non limitatif d'un dispositif de chauffage par induction d'un chauffe-eau, vont être maintenant détaillés.

Le dispositif 1 de chauffage par induction, illustrant un quelconque dispositif inductif selon la présente invention qui est non spécifiquement dédié au chauffage du chauffe-eau, peut être disposé près de et dans la partie inférieure médiane du chauffe-eau 8, le générateur 7 étant disposé à l'extérieur, avantageusement en dessous du chauffe-eau 8 quand celui s'étend verticalement.

Une possibilité avantageuse est de proposer un kit induction, à savoir, une plaque de fermeture 11 de la trappe 9 décris ci-après supportant d'un côté le module inductif et de l'autre côté, le générateur de puissance 7. L'équipement du chauffe-eau par des moyens de chauffage à induction peut ainsi être effectué sans intervention aucune sur la mécanique du chauffe-eau, juste par l'introduction du Kit. Par exemple, le générateur de puissance 7 peut être rond ou rectangulaire, articulé autour du tube d'arrivé d'eau froide 12 et solidaire de la plaque de fermeture 11.

La forme oblongue de la bobine et plus généralement du module inductif facilite son montage et démontage dans le corps de chauffe par la trappe 9 de dimensions les plus restreintes améliorant la résistance à la pression du chauffe-eau.

Tel que décrit ci-après, la forme ronde de la bobine solénoïdale et de ses charges sous forme de billes contraintes à se déplacer dans une zone confinée soumise au champ de la bobine d'induction, la cage, possède aussi une forme facilitant montage et démontage du module inductif dans le corps de chauffe.

Il peut être prévu des boutons de commande portés par une interface de commande positionnée en partie frontale du chauffe-eau 8 et pouvant afficher de façon optionnelle les paramètres de fonctionnement et d'état du chauffe-eau 8 et du réseau électrique. Cette interface est équipée d'un module de communication par exemple avec un réseau de communication local. Un tel réseau permet d'échanger les informations de consommation du chauffe-eau 8 au système central de gestion d'énergie électrique et aussi d'être piloté par ce système.

C'est le générateur qui comprend, selon l'état de la technique, des moyens de refroidissement du type ventilateur. Le chauffe-eau selon l'invention comprend des moyens d'échanges thermiques. Avantageusement, l'échangeur de chaleur est un échangeur avec passage d'eau, préférentiellement d'eau à chauffer, par exemple l'eau d'alimentation du chauffe-eau 8 passant par au moins un conduit d'arrivée 12 d'eau à chauffer.

Les moyens d'échange thermiques selon l'invention comprennent le dissipateur sur lequel les composants de puissance sont reliés thermiquement. Selon une possibilité, le dissipateur comprend une portion formant une enveloppe pour évacuer la chaleur produite lors du fonctionnement du générateur 7, ceci avec le chauffe-eau 8. Pour ce faire, il est prévu un circuit de circulation de l'eau en direction du corps de chauffe. On entend par enveloppe une interface entre le circuit de circulation de l'eau et les composants de puissance. L'enveloppe s'entend comme le dissipateur entourant le circuit de circulation de l'eau en direction du corps de chauffe. Le circuit de circulation est préférentiellement relié au conduit d'arrivée 12 d'eau à chauffer.

Selon une possibilité représentée, l'enveloppe se réduit à un manchon 16 coopérant avec une partie du conduit d'arrivée 12 d'eau à chauffer. L'enveloppe peut être en liaison thermique avec le circuit de circulation d'eau ou bien constituer le circuit de circulation d'eau. Dans ce dernier cas, l'eau circule directement dans l'enveloppe.

Selon une possibilité, l'ensemble comprend un circuit complémentaire. Un piquage d'eau peut être prévu à partir du conduit d'arrivée 12 pour former un circuit de circulation d'eau complémentaire à l'intérieur du boîtier 17.

Il peut être prévu, sans que le manchon 16 ne serve à l'évacuation de chaleur hors du générateur 7 en étant remplacé par un autre moyen d'échange de chaleur ou en complément avec un tel échange de chaleur, que le manchon 16 ait comme fonction respectivement principale ou additionnelle de fixer le boîtier 17 du générateur 7 par rapport à un conduit d'arrivée 12 d'eau, ce qui est avantageux pour le maintien du boîtier 17.

Pour son refroidissement, le générateur 7 de puissance est solidarisé thermiquement au chauffe eau, plus précisément, le dissipateur supportant les composants de puissance du générateur 7.

Selon un mode de réalisation préféré, le générateur 7 et plus précisément le dissipateur est isolé thermiquement de sorte à limiter les échanges thermiques avec l'air extérieur et à concentrer les échanges thermiques avec la zone de passage de l'eau vers ou dans le corps de chauffe.

D'autres configurations d'échange de chaleur entre le générateur de puissance 7 et l'eau à chauffer du chauffe-eau 8, c'est-à-dire contenue ou arrivant au corps de chauffe 8, sont aussi possibles.

Par exemple, de manière alternative ou additionnelle au circuit de circulation d'eau, le générateur 7 peut être accolé à l'extérieur du corps de chauffe sur une zone non isolée thermiquement, un échangeur de chaleur étant avantageusement agencé entre le corps de chauffe et le générateur 7, plus précisément le dissipateur est relié thermiquement au corps de chauffe..

Dans une alternative, la zone non isolée thermiquement du corps de chauffe est la plaque de fermeture 11. Les composants de puissance du générateur 7 peuvent être thermiquement reliés à la plaque de fermeture 11 de la trappe 9 décris ci après, préférentiellement par l'intermédiaire du dissipateur, et dissipant leur chaleur indirectement à l'eau contenue dans le corps de chauffe. Dans cette alternative combinée à la présence du circuit de circulation d'eau, le conduit d'arrivée d'eau à chauffer 12 peut être solidarisé sur la plaque de fermeture 11. Le conduit d'arrivée d'eau à chauffer 12 est préférentiellement en aluminium et permet un échange thermique amélioré.

Par exemple, de manière alternative ou additionnelle, le générateur de puissance 7 peut être agencé plongeant dans le corps de chauffe du chauffe-eau 8, ceci avec ou sans un échangeur de chaleur agencé entre l'eau contenue dans le corps de chauffe et le générateur 7.

Selon une variante, seul le dissipateur est agencé plongeant dans le corps de chauffe, le reste du générateur 7 étant à l'extérieur du corps de chauffe. Il y a une conduction directe entre le dissipateur et l'eau. A titre d'exemple, une pièce unique en aluminium anodisé s'étendant à l'extérieur et à l'intérieur peut faire office de raccordement au conduit d'eau à chauffer 12, de dissipateur pour les composants de puissance, de support à l'extérieur pour le générateur de puissance, de support à l'intérieur du module inductif. L'avantage de cette pièce unique est qu'elle cumule la fonction de dissipateur par conduction et convection par le passage d'eau à chauffer.

Le refroidissement du générateur 7 est possible même selon le mode de réalisation comprenant un circuit d'eau en direction du corps de chauffe et ceci même en l'absence de remplissage du corps de chauffe grâce à la convection. En effet, l'échange de chaleur produit par les moyens d'échange réchauffe l'eau de la zone de passage et refroidit le générateur 7 localement, plus précisément le dissipateur, l'eau de la zone de passage réchauffée va subir des mouvements de convection l'éloignant de la zone de passage et rapprochant de l'eau à plus basse température créant un flux convectif. Avantageusement, cet effet est renforcé par l'agencement du générateur 7 en dessous de la cuve du chauffe-eau et le mouvement de l'eau chaude qui monte vers la cuve. Selon une possibilité préférée, les moyens d'échange sont positionnés au plus prés du corps de chauffe.

L'inducteur 2 du dispositif 1, avantageusement sous forme d'une bobine plate, préférentiellement de forme oblongue reliée au générateur 7 par des raccordements électriques 10, de même que son support 3, est préférentiellement disposé à l'intérieur du chauffe-eau 8 par exemple en pénétrant dans ledit chauffe-eau 8 par une trappe 9 prévue dans la partie inférieure médiane du chauffe-eau 8.

On entend par plate ou aplatie que l'épaisseur de la bobine est moindre que ces autres dimensions notamment longueur, largeur.

Selon une possibilité, l'inducteur 2 s'étend sur une partie de la longueur du chauffe-eau 8. L'inducteur est agencé en partie inférieure du chauffe-eau. A titre d'exemple non limitatif, l'inducteur 2 représente maximum la moitié de la longueur du chauffe-eau, préférentiellement entre un quart et un huitième de la longueur du chauffe-eau 8.

Selon un mode de réalisation, le support 3 de l'inducteur 2 présente une première partie 3b, surmoulée autour de la bobine plate formant l'inducteur 2. Cette partie 3b est destinée à être complètement introduite dans le chauffe-eau 8.

La bobine plate formant l'inducteur 2 est un conducteur bobiné sur lui-même. La bobine comprend avantageusement un isolant électrique mis en place à la fabrication de la bobine. Pour cela, l'isolant peut être une résine présentant également des propriétés d'isolation à l'eau permettant une immersion directe de la bobine dans le chauffe-eau ; le coût d'un tel matériau est cependant assez élevé. Selon une autre possibilité, la bobine est réalisée avec un vernis, préférentiellement de classe de température moyenne, car le tout est immergé et l'eau ne dépasse pas 100°C. Cette bobine doit alors être isolée de l'eau. Pour cela la bobine est surmoulée par un plastique alimentaire permettant l'isolation électrique nécessaire à l'immersion. Avantageusement, le surmoulage permet la réalisation du support 3 dans diverses formes.

A l'intérieur de la bobine plate formant l'inducteur 2, avantageusement à mi-longueur de la bobine, il peut être prévu au moins un capteur de température, par exemple du type NTC (Negative Temperature Curve) ou du type PTC (Positive Temperature Curve), ce capteur de température étant immergé à l'intérieur du chauffe-eau 8 et délivrant des valeurs de température transmises au générateur 7 du dispositif 1.

Le support 3 présente aussi une seconde partie 3a, moins large que la première partie 3b, cette seconde partie 3a se trouvant à l'extérieur du chauffe-eau 8 et prolongeant la première partie 3b en direction du générateur 7 en ne portant que les raccordements électriques 10. La jonction entre première 3b et seconde 3a parties de plus faible largeur présente par exemple des épaulements 15 latéraux.

La trappe 9 peut présenter par exemple une forme extérieure rectangulaire qui la différencie sensiblement de la trappe généralement de forme circulaire pour le passage de la résistance électrique dans un chauffe-eau de l'état de la technique. La trappe 9 est fermée par au moins une plaque de fermeture 11, fixée à la trappe 9 par des moyens de solidarisation amovibles du type vis en intercalant par exemple un joint d'étanchéité. La plaque de fermeture 11 présente une ouverture rectangulaire centrale juste suffisante pour le passage de la seconde partie 3a du support 3 à travers elle, les épaulements 15 portés par la première partie 3b du support 3 à sa jonction avec la seconde partie 3a arrivant en butée interne contre la plaque de fermeture 11.

La plaque de fermeture 11 peut être solidarisée au support 3 directement lors du surmoulage de la bobine 2 par un matériau plastique.

Quand l'eau du chauffe-eau 8 est froide, la demande de puissance sera maximale et donc l'énergie demandée est alors forte, sollicitant les composants du générateur 7 de puissance qui sont alors maintenus en dessous d'environ 120°C. L'eau est alors régulée pour ne jamais dépasser 60°C par exemple en bas de cuve et sert donc d'excellent dissipateur pour les pertes de ces composants qui, à leur tour, participent mais d'une façon moindre que l'inducteur 2 au rendement.

Quand l'eau commence à être chaude, l'effet de dissipation sera moindre mais la demande en énergie aussi et donc il est encore possible de refroidir efficacement les composants du générateur 7 de puissance. Ceci permet une réduction significative du dissipateur de chaleur et une suppression de la ventilation traditionnellement utilisée dans les dispositifs par induction domestiques.

En regard des figures 1 à 5, il va être repris plus spécifiquement ci-après comme dispositif inductif un dispositif 1 de chauffage par induction du chauffe-eau 8, le module inductif étant plongé au moins partiellement dans le corps de chauffe d'un chauffe-eau 8.

Pour pallier au moins partiellement les pertes précédemment mentionnées, la présente invention prévoit avantageusement, dans une de ses formes de réalisation, de loger l'inducteur 2 à l'intérieur du chauffe-eau 8 directement dans l'eau contenue dans le chauffe-eau 8, au moins une charge sous la forme d'une plaque 4 ou 5 étant aussi immergée dans l'eau.

Ceci repose sur le constat que les pertes principales du dispositif 1 de chauffage par induction s'effectuent par l'inducteur 2. De cette façon, l'inducteur 2 et au moins une charge 4, 5 échangent aussi leurs pertes avec l'eau et donc, ces pertes sont récupérées pour le chauffage de l'eau du chauffe-eau 8. Ceci vient en complément des calories récupérées lors du refroidissement du générateur de puissance 7 comme précédemment mentionné, en assurant cependant une grande partie du chauffage.

L'inducteur peut être similaire à un inducteur comme employé dans une plaque de cuisson par induction, l'inducteur étant du type bobine plate connue aussi sous la dénomination anglaise de « pan cake ». Ce type de bobine est parfaitement symétrique, à savoir que le champ magnétique est généré également sur les deux faces. Une face est traditionnellement équipée d'un circuit magnétique dont le rôle est de canaliser le champ généralement inférieur de l'inducteur et de le renvoyer vers la charge 4, 5, généralement posée sur la partie supérieure de la bobine formant l'inducteur.

En extrapolant ces caractéristiques au dispositif 1 de chauffage par induction selon l'invention et donc en prévoyant comme inducteur 2 une bobine plate générant un champ magnétique sur deux faces, il est ainsi utilisé une charge 4, 5 à chauffer sur chaque face de la bobine plate, ces charges 4, 5 présentant des caractéristiques ferromagnétiques adéquates. Il est ainsi possible de faire l'économie d'un circuit magnétique dans l'inducteur 2.

Ceci permet aussi d'augmenter, plus précisément de doubler la surface d'échange et donc de diminuer les densités de puissance et donc d'obtenir un meilleur échange de l'énergie avec l'eau. L'inducteur 2 et ses charges 4, 5, dont l'une au moins, préférentiellement les deux sont immergées, sont donc constitués, à titre d'exemple non limitatif, d'une bobine plate centrale et de deux plaques ferromagnétiques 4, 5 couplées magnétiquement avec la bobine 2. Ces deux plaques 4, 5 sont le siège de courants de Foucault quand la bobine 2 est alimentée par le générateur 1 et sont opérationnelles pour le chauffage de l'eau.

Il peut être envisagé d'autres formes de bobine 2 d'induction qu'une bobine plate à induction sur ses deux faces. Une bobine 2 pouvant être utilisée dans le cadre de l'invention peut être sous forme d'un solénoïde avec des charges interne ou externe, soit simultanément interne et externe pour faire en sorte que les charges servent aussi de circuits magnétiques comme dans le cas de deux plaques 4, 5 de charge.

Cependant, il est plus avantageux d'avoir une large surface d'échange avec une configuration à plaques. Cette configuration possède aussi l'avantage d'être particulièrement fine, par exemple d'une épaisseur de 3 cm, ce qui facilite son intégration dans des formes de chauffe-eau 8 particulières comme des chauffe-eaux plats ou autres qui commencent à faire leur apparition sur le marché.

Les charges 4, 5 sont en matériaux conducteurs électriques soit magnétiques, soit amagnétiques.

Les matériaux magnétiques pour des plaques 4, 5 sont plus avantageux à chauffer que des matériaux non magnétiques.

Il est aussi possible de réaliser les charges 4,5 en matériau conducteur et amagnétique de faible épaisseur, ces matériaux conducteurs, amagnétiques et de faible épaisseur, de l'ordre de 100 micromètres, étant préférentiellement accolés a un support non magnétique et non conducteur assurant leur tenue mécanique.

Ces plaques 4, 5 peuvent posséder des formes ou des états de surface particuliers permettant, d'une part, d'améliorer l'échange thermique avec l'eau et, d'autre part, d'optimiser le couplage avec la bobine 2 d'induction, tout en évitant au maximum le dépôt de tartre.

A titre d'exemple, les plaques 4, 5 présentent des ouvertures traversantes tels des trous circulaires. Ces ouvertures améliorent la circulation de l'eau autour des plaques.

Il faut considérer dans ce cas que les plaques 4, 5 deviennent les éléments chauffants et donc que le tartre a tendance à se déposer sur les plaques 4, 5 et non sur la bobine 2. Ce phénomène est cependant minimisé car, pour une puissance donnée, la densité de puissance est moindre et donc la surface est moins chaude. Il faut aussi noter que le risque de casse de l'élément chauffant par surchauffe disparaît car les plaques 4, 5 sont purement passives et ne peuvent être affectées par une surchauffe éventuelle.

Le point de Curie étant la température à partir de laquelle la perméabilité magnétique d'un matériau ferromagnétique passe à µr = 1 ; le matériau devient amagnétique, le phénomène d'induction agit jusqu'au point de Curie des matériaux constituant les plaques 4, 5 de charge. Il peut ainsi être avantageux de réaliser ces plaques 4, 5 dans un matériau possédant un bas point de Curie préférentiellement inférieur à 100° C, par exemple 90°C ou moins, ce qui est simplement illustratif et non limitatif.

Dans ce cas, l'inducteur 2 chauffe indirectement les plaques 4, 5 de charge tant que la température de celles-ci ne dépasse pas 90°C. Au-delà de cette température, le matériau passe son point de Curie et devient amagnétique ce qui entraine que le flux magnétique de la bobine n'est plus canalisé dans la charge ayant pour conséquence une diminution très forte de la partie active de l'impédance de la bobine rendant impossible le fonctionnement du générateur., Le chauffage ne reprend qu'après refroidissement et passage de la température du matériau des plaques 4, 5 en dessous du point de Curie, c'est-à-dire dans sa zone ferromagnétique.

La réalisation des plaques 4, 5 dans un tel matériau ferromagnétique à bas point de Curie peut permettre une sécurité thermique absolue et supplémentaire pour l'inducteur 2 et le dispositif 1 de chauffage le contenant.

Il est aussi possible d'optimiser la forme, le matériau et/ou la fixation des plaques 4, 5 de façon à ce que celles-ci se déforment légèrement en chauffant, ces déformations empêchant ou évacuant les dépôts de tartre qui auraient pu les recouvrir. Des matériaux déformables par exemple à mémoire de forme peuvent être utilisés.

Enfin, il peut aussi être intéressant de réaliser un traitement de surface permettant d'assurer la compatibilité des plaques 4, 5 aux normes alimentaires et permettant de minimiser les dépôts de tartre grâce à des propriétés antiadhésives.

Selon un mode de réalisation intégrant un inducteur 2 sous forme de solénoïde avec des charges 4-5 interne et/ou externe de section circulaire, il peut être prévu que les charges 4-5 soient sous la forme d'au moins une élément conducteur électrique mobile maintenu dans une zone correspondant avantageusement au moins partiellement à la zone d'action du champ de l'inducteur 2. Le au moins un élément conducteur est préférentiellement libre de mouvement dans cette zone. Le au moins un élément conducteur est avantageusement configuré pour être mis en mouvement par les flux d'eau dans le corps de chauffe, plus précisément dans la zone d'action du champ de l'inducteur 2. Pour mettre en mouvement le au moins un élément, il est préféré que le conduit d'arrivée d'eau à chauffer 12 soit placé sous l'inducteur 2 de sorte que l'introduction d'eau dans le corps de chauffe assure le brassage de l'au moins un élément. Ce brassage limite le dépôt de calcaire et facilite éventuellement son décrochage notamment par l'entrechocage de l'au moins un élément avec un autre au moins élément ou bien avec son moyen de maintien décrit ci-après. Le au moins élément est de forme et/ou de propriétés limitant l'accrochage du calcaire et/ou facilitant son décrochage. Le au moins un élément est maintenu dans la zone d'action du champ de l'inducteur 2 par un moyen de maintien par exemple par un axe sur lequel le au moins un élément est mobile suivant au moins un degré de liberté ou par exemple par une cage délimitant la zone dans laquelle le au moins un élément doit être maintenu et le laissant libre de mouvement suivant tous les degrés de liberté.

Selon un mode de réalisation le au moins un élément est au moins une bille. Préférentiellement, les charges 4, 5 sont des billes maintenues dans une zone avantageusement correspondant au moins partiellement à la zone d'action du champ de l'inducteur 2. Cette zone est préférentiellement définie par une cage.

Les billes sont par exemple en matériaux ferromagnétiques qui chauffent sous l'effet du champ induit par l'inducteur 2. Les billes peuvent être de diverses formes : de section circulaire, cylindrique ou autre. Les billes d'une même charge 4, 5 entre elles peuvent être de forme diverses. Les billes sont configurées pour permettre d'une part de réaliser une charge donc un chauffage par induction adéquat, d'autre part permettant de minimiser l'incrustation de tartre et éventuellement faciliter son décrochage.

La cage est configurée pour permettre un mouvement des billes et notamment leur entrechoquement. La forme même des billes avantageusement de section circulaire, limite le dépôt de tartre. De plus les chocs entre les billes facilitent l'élimination du tartre déposé. Préférentiellement, la cage de chaque charge 4 -5 est dans un matériau non conducteur de sorte à ne pas chauffer et ne pas risquer d'être entartré. La cage est configurée pour permettre un échange thermique des billes avec l'eau le plus efficace possible.

Par exemple, les billes sont maintenues dans une zone annulaire concentrique à la bobine.

Selon un mode de réalisation dans lequel au moins une charge 4, 5 est sous forme de cage à billes interne agencée à l'intérieur de l'inducteur sous forme de solénoïde, la cage interne est avantageusement formée par le solénoïde. Les billes sont placées dans le volume intérieur définit par le solénoïde, les extrémités du solénoïde sont fermées par une paroi préférentiellement une grille dont le maillage est inférieure à la plus petite section des billes de sorte à maintenir les billes tout en laissant passer le tartre éventuel se décrochant des billes ainsi que pour assurer une bonne circulation de l'eau autour des billes.

Préférentiellement, la cage à bille externe est formée d'au moins une grille tubulaire entourant l'inducteur 2.

Selon une possibilité préférée, les charges 4-5, sont solidarisées à la plaque de fermeture 11, de même que l'inducteur 2, de sorte à faciliter la mise en place et le retrait du module inductif.

La structure de ces charges 4 -5 est avantageuse car elle facilite la circulation de l'eau autour et dans le module inductif.

Les billes ont une taille par exemple de l'ordre de 15 mm. Chaque charge 4 -5 peut être composée de 10 à 30. La surface d'échange est au moins comparable à celle d'une charge de forme rectangulaire.
Il est préféré que les billes soient légères pour faciliter leur brassage. De plus, le phénomène de l'induction se produit sur une épaisseur dite « de peau ». On peut ainsi réduire l'épaisseur du matériau conducteur de l'au moins un élément conducteur.

La suite de la description est faite en référence à la bille sans que cela n'induise de limitation. Une bille peut être pleine ou creuse avec seulement une enveloppe de matériau conducteur. La charge peut être composée de billes de nature différente.

Pour les matériaux magnétiques, une épaisseur de 0,5 mm pour une fréquence de champ de 20 KHz est suffisant, le coeur étant creux ou en matériau préférentiellement plus léger que le matériau conducteur.

Pour les matériaux amagnétiques, il est préféré que la bille comprenne une enveloppe conductrice amagnétique de faible épaisseur de sorte à ne pas ramener une impédance inadaptée sur l'inducteur. Dans ce cas, il est préféré, que l'épaisseur de l'enveloppe soit inférieure à l'épaisseur de la peau, à titre d'exemple préféré de l'ordre de 1/10 de l'épaisseur de la peau. Le coeur est creux ou en matériau non conducteur et préférentiellement plus léger que le matériau conducteur.

Les billes ferritiques sont soumises simultanément à la fréquence considérée, à un effet d'attraction lié à leur perméabilité magnétique et à un effet de répulsion lié aux courants induits, la résultante étant quasi nulle. Par contre, les billes amagnétiques dont la couche conductrice est d'une épaisseur d'environ 1/10 de l'épaisseur de peau ne sont soumises qu'à la force de répulsion liée aux courants induits dite force de Laplace. Cette force peut être, suivant le poids des billes, suffisante pour provoquer leur déplacement et leur entrechocage ayant un effet détartrant, ce phénomène étant accentué s'il est cumulé au flux d'eau généré par la sortie du conduit d'eau à chauffer 12.

L'intérêt d'un inducteur 2 immergé dans l'eau du chauffe-eau 8 est aussi d'avoir à disposition un système électronique complet permettant :
- une régulation très fine de température par l'intermédiaire d'au moins un capteur immergé du type NTC, c'est-à-dire sous forme d'une thermistance dont la résistance diminue avec la température. En alternative il peut être utilisé un capteur PTC, c'est-à-dire sous forme d'une thermistance dont la résistance augmente avec la température. La température peut alors être régulée avec des cycles prédéfinis de chauffage, voire une anticipation de demande d'eau chaude à des moments particuliers prédéfinis ou calculés par apprentissage, effet, les chauffe-eau existants sont en effets équipés de thermostats qui sont réglés en usine ou par l'installateur une fois pour toute et qui ne sont pas réglables par l'utilisateur. Or on sait que plus l'eau est chaude, plus le niveau de perte par refroidissement naturel est important, il peut donc être intéressant, dans un objectif de minimisation des pertes, de non seulement planifier les chauffes par apprentissage en fonction des besoins, mais aussi, de régler suivant ces besoins, la ou les températures du corps de chauffe à des valeurs optimales et/ou
- de connaître et de contrôler finement les puissances injectées sur un ou plusieurs inducteurs 2.

Ce dernier avantage est particulièrement important dans le cas des nouvelles énergies et de leurs utilisations. Il est en effet, d'une part, possible de communiquer rapidement avec les systèmes de gestion d'énergie pour faire correspondre l'énergie prélevée à l'énergie disponible et, d'autre part, de réguler finement l'énergie jusqu'à des puissances très faibles et/ou très fortes, ceci en conservant un rendement élevé.

Un inducteur 2 immergé dans l'eau du chauffe-eau 8 est particulièrement avantageux par rapport à un inducteur qui chauffe directement la cuve servant de corps de chauffe. En effet, il permet d'isoler électriquement les plaques 4, 5 réceptrices d'énergie du corps de chauffe et donc de la terre et, de ce fait, de réduire significativement les dimensions des filtres électroniques chargés d'éliminer le rejet des composantes hautes fréquences vers le secteur d'alimentation ou la terre.

L'inducteur 2 peut donc être particulièrement compact, ce qui facilite son intégration et le rend aussi particulièrement économique.

Il peut être possible d'économiser encore davantage sur le coût du dispositif de chauffage par induction, notamment sur l'inducteur 2. Ceci peut être fait, par exemple, en réalisant le bobinage de façon moins compliqué que ne l'imposent les règles de l'art de conception. Ceci peut être fait en minimisant, par exemple, la section du bobinage ou en réalisant le bobinage en utilisant un conducteur massif, voire un circuit imprimé de puissance.

Dans ce cas, les pertes sont plus importantes, mais sont calculées pour être acceptables pour le dispositif 1 sachant qu'elles se transmettent à l'eau et donc se transforment en énergie récupérée.

Selon l'état de la technique, il existe de nombreux modes de réalisation d'antitartres magnétiques, soit à aimants permanents, soit à bobines créant des champs magnétiques variables dans des gammes de fréquences pouvant atteindre 100kHz. Les appareils antitartres électroniques utilisant ces principes, bien que coûteux, restent de puissance modeste, pas plus que quelques dizaines de Voltampères, et génèrent des champs faibles de quelques dizaines d'Ampère/mètre.

Par contre, l'inducteur 2 immergé, utilisé dans le dispositif selon la présente invention, est d'une puissance forte de plusieurs milliers de Voltampères et génère des champs particulièrement élevés, supérieurs à 1.000 Ampère/mètre dans l'entrefer de la bobine et des plaques 4, 5 et dans les mêmes gammes de fréquence de 20 à 50 kHz. Il peut donc être intéressant de faire en sorte que l'arrivée d'eau froide ou simplement un passage d'eau se fasse entre les plaques 4, 5, de façon à ce que l'eau passe dans un champ magnétique intense, pouvant agir sur les ions en suspension dans l'eau et provoquant un effet de non déposition de ces ions sur les éléments chauds, c'est-à-dire un effet de détartrage. Il peut donc s'agir d'une conséquence bénéfique consécutive à l'adoption de l'inducteur 2 immergé dans le chauffe-eau 8 mais ceci n'est pas l'effet principal recherché.

Il est possible de forcer le passage de l'eau entre les plaques 4, 5 en réalisant des géométries particulières, par exemple, en pliant un des cotés des plaques 4, 5, de façon à ce que les deux plaques 4, 5 en vis-à-vis forment une sorte de boîte rectangle au centre de laquelle est disposée la bobine 2 d'induction et dans laquelle passe l'eau froide d'arrivée du chauffe eau 8.

Une forme fermée de ce genre peut aussi avoir un intérêt dans le cadre d'utilisation de cuves servant de corps de chauffe non métalliques ou en matériaux composites. Dans ce cas, il convient de canaliser au mieux le champ magnétique émis par le bobinage. Une géométrie fermée permet avantageusement une canalisation des flux magnétiques et donc une plus grande facilité pour répondre aux normes relatives aux perturbations électromagnétiques.

A titre d'exemple illustratif et non limitatif, l'invention a été appliquée à un chauffe-eau 8 de 100 litres. Dans le dispositif de chauffage par induction, l'inducteur 2 est un onduleur de type demi-pont série d'une puissance maximale de 3.700 Watt correspondant à un courant de 16 Ampères sous 230 Volts.

L'inducteur 2 est à titre illustratif et non limitatif, une bobine plate de dimensions 55x340x4 mm, positionnée verticalement dans le chauffe-eau 8. La bobine plate 2 est constituée de 24 tours de fil émaillé multibrins assurant la première isolation électrique, le nombre de tours et la distance avec les plaques 4, 5 permettant de ramener sur le générateur 7 de puissance à résonance une impédance compatible avec la puissance à transmettre.

Avantageusement, la bobine d'induction est un bobinage d'un toron de fil divisé ou d'un conducteur massif en cuivre ou en aluminium. Le bobinage est ensuite surmoulé dans un matériau isolant électrique permettant d'assurer l'isolation nécessaire au composant immergé, ce matériau en contact avec l'eau possédant par ailleurs des caractéristiques alimentaires. Un composant du type NTC est positionné au centre du bobinage et surmoulé avec celui-ci. Il assure, en tant que capteur, la lecture de la température qui va permettre une régulation fine de l'inducteur 2.

Deux plaques ferritiques, d'épaisseur pouvant avantageusement varier entre 6/12 et 12/10 et étant pliées à 90° sur un coté de façon à former un parallélépipède lorsqu'elles sont montées face à face, sont positionnées de part et d'autre du bobinage inducteur à une distance de 6 mm permettant le passage de l'eau entre les plaques 4, 5 et l'inducteur 2. Avantageusement, les dimensions des plaques 4, 5 sont de 380 x 70 mm.

Les plaques 4, 5 sont solidarisées au support 3, avantageusement plastique ou composite, par des espaceurs 6 centraux, le support 3 lui-même étant au moins en butée ou solidarisé à la plaque de fermeture 11 de la trappe 9 de visite du chauffe-eau 8, de façon à ce que les plaques 4, 5 soient électriquement flottantes. Un revêtement anti-adhésif est appliqué sur les plaques 4, 5 de façon à limiter l'accroche de dépôts de calcaire pendant les chauffes successives. Il est avantageux de prévoir des formes et des découpes sur ces plaques 4, 5 de façon, d'une part, à optimiser la circulation et le chauffage de l'eau et, d'autre part, à diminuer encore l'accroche de dépôts de calcaire.

L'inducteur 2 et le capteur de température sont reliés électriquement au générateur 7, avantageusement solidarisé de l'autre côté de la plaque de fermeture de la trappe 9 et donc hors du chauffe-eau 8.

Ce chauffe-eau plat, c'est-à-dire de forme sensiblement parallélépipédique préférentiellement rectangle aplatie, comprend au moins un conduit d'arrivée 12 d'eau à chauffer, un conduit de sortie 13 d'eau chauffée ainsi qu'un conduit de purge 12b d'eau, notamment pour vider le chauffe-eau 8.

Selon un mode de réalisation, dans le chauffe-eau 8 s'étendent, dans toute la longueur du chauffe-eau 8, des parois intercalaires 19 régulièrement espacées, par exemple quatre parois intercalaires 19 dans un chauffe-eau 8.

Ces parois intercalaires 19 présentent une largeur équivalente à l'épaisseur du chauffe-eau 8 délimitant ainsi des canaux longitudinaux pour le passage de l'eau. C'est dans un tel canal, avantageusement celui qui est médian au chauffe-eau 8, que se trouve le module inductif du dispositif 1 de chauffage par induction, illustrant non limitativement un dispositif inductif dont le générateur est refroidi par le chauffe-eau 8.

Préférentiellement, les parois intercalaires 19 présentent des ouvertures 20 par exemple à intervalles réguliers faisant communiquer deux canaux longitudinaux adjacents entre eux. Ces parois intercalaires 19 servent ainsi au renfort du chauffe-eau 8 ainsi qu'à la circulation de l'eau dans le corps de chauffe

Dans une autre forme de réalisation, les canaux longitudinaux correspondent à plusieurs cuves. A titre préféré, les cuves sont de section circulaire. Par exemple, le chauffe-eau 8 peut être composé de trois cuves servant de corps de chauffe élémentaires cylindriques, avantageusement ces cuves présentent une section de dimension sensiblement équivalente à la dimension de la section parallélépipédique d'un canal longitudinal.

### REFERENCES

- 1.: Dispositif
- 2.: Inducteur
- 3.: Plaque support
- 3a.: Première partie
- 3b.: Seconde partie
- 4.: Charge
- 5.: Charge
- 6.: Espaceur
- 7.: Générateur
- 8.: Chauffe-eau
- 9.: Trappe
- 10.: Raccordement électrique
- 11.: Plaque de fermeture
- 12.: Conduit d'arrivée
- 12b.: Conduit de purge
- 13.: Conduit de sortie
- 14.: Composant
- 15.: Epaulement
- 16.: Manchon
- 17.: Boîtier
- 19.: Paroi intercalaire
- 20.: Ouverture

## Revendications

1. Ensemble comprenant un chauffe-eau (8) comportant un corps de chauffe destiné à contenir un volume d'eau, comprenant un conduit d'arrivée (12) d'eau à chauffer et un conduit de sortie (13) d'eau chauffée, dans lequel l'ensemble comprend au moins un générateur (7) de puissance, au moins un premier module inductif alimenté par ledit au moins un générateur de puissance et configuré pour produire un courant induit dans un élément conducteur d'électricité, et des moyens d'échange (11, 12, 16, 17) de chaleur entre ledit au moins un générateur (7) et une zone de passage de l'eau en direction ou dans le corps de chauffe, ensemble dans lequel le au moins un premier module inductif comprend un module inductif dédié au chauffage de l'eau contenue dans le corps de chauffe du chauffe-eau (8), ledit premier module inductif comprenant un inducteur (2) et au moins une charge (4, 5), l'inducteur (2) étant configuré pour générer un courant induit dans la charge (4, 5).

2. Ensemble selon la revendication précédente dans lequel la zone de passage de l'eau permettant l'échange thermique avec les moyens d'échange est agencée comme un circuit de circulation d'eau en direction du corps de chauffe.

3. Ensemble selon la revendication précédente dans lequel les moyens d'échange comprennent une enveloppe liée au générateur (7) de puissance et entourant le circuit de circulation.

4. Ensemble selon l'une quelconque des deux revendications précédentes comprenant un circuit complémentaire parcourant le générateur (7) et agencé en dérivation de la portion du conduit d'arrivée (12) d'eau à chauffer.

5. Ensemble selon l'une quelconque des revendications précédentes dans lequel les moyens d'échange de chaleur avec la zone de passage de l'eau dans le corps de chauffe comprennent une zone non isolée thermiquement du corps de chauffe à laquelle le générateur (7) est accolé.

6. Ensemble selon la revendication précédente dans lequel le chauffe-eau (8) comprend une trappe (9) pour l'introduction de moyens de chauffage de l'eau dans son corps de chauffe, ladite trappe (9) étant fermée par une plaque de fermeture (11), ladite plaque de fermeture (11) étant une zone non isolée thermiquement du corps de chauffe à laquelle est accolée le générateur (7).

7. Ensemble selon l'une quelconque des revendications précédentes dans lequel les moyens d'échange de chaleur avec la zone de passage de l'eau dans le corps de chauffe comprennent un boîtier de réception (17) du générateur (7) plongé dans le corps de chauffe du chauffe-eau (8).

8. Ensemble selon l'une quelconque des revendications précédentes dans lequel ledit au moins un générateur (7) comporte au moins deux sorties électriques, chacune pour un module inductif dédié à un appareil électrique.

9. Ensemble selon l'une quelconque des revendications précédentes dans lequel l'inducteur (2) et la au moins une charge (4, 5) sont plongés dans le corps de chauffe de sorte à pouvoir être immergés dans l'eau.

10. Ensemble selon la revendication précédente dans lequel le corps de chauffe comprend une pluralité de canaux longitudinaux juxtaposés et connectés fluidiquement entre eux, au moins un canal longitudinal recevant le module inductif dédié au chauffage de l'eau.

11. Ensemble selon l'une des revendications 8 à 10 dans lequel le au moins un module inductif comporte un deuxième module inductif dédié au chauffage d'au moins une plaque de cuisson à induction.

12. Ensemble selon l'une quelconque des revendications précédentes dans lequel le corps de chauffe est parallélépipédique.

13. Procédé de refroidissement d'au moins un générateur (7) de puissance d'un dispositif inductif, comprenant au moins un module inductif dédié à un appareil électrique comprenant une étape d'échange de chaleur entre une zone de passage de l'eau dans ou vers un corps de chauffe d'un chauffe-eau (8) et ledit au moins un générateur (7), cette étape contribuant au refroidissement dudit au moins un générateur (7) tout en permettant un chauffage d'appoint de l'eau de la zone de passage dans ou vers le corps de chauffe du chauffe-eau (8) et dans lequel au moins un module inductif est dédié au chauffage de l'eau contenue dans le corps de chauffe du chauffe-eau (8), ledit premier module inductif comprenant un inducteur (2) et au moins une charge (4, 5), l'inducteur (2) étant configuré pour générer un courant induit dans la charge (4, 5).

## Patentansprüche

1. Einheit, welche einen Wassererhitzer (8) umfasst, der einen Heizköroper zur Aufnahme einer Wassermenge enthält, welcher eine Einlassleitung (12) für das zu erhitzende Wasser und eine Ablassleitung (13) für das erhitzte Wasser umfasst, in welcher die Einheit mindestens einen Stromgenerator (7), mindestens ein erstes induktives Modul, welches von mindestens einem Stromgenerator versorgt wird und so gestaltet ist, dass in einem elektrischen Leitelement ein induzierter Strom erzeugt wird, und Mittel zum Austausch von Wärme (11, 12, 16, 17) zwischen mindestens einen Generator (7) und einem Wasserdurchlaufbereich in Richtung des beziehungsweise im Heizkörper umfasst, eine Einheit, in der mindestens ein erstes induktives Modul ein induktives Modul enthält, das zur Erhitzung des Wassers im Heizkörper des Wassererhitzers (8) bestimmt ist, wobei dieses erste induktive Modul einen Induktor (2) und mindestens eine Last (4, 5) umfasst, und der Induktor (2) so gestaltet ist, dass in der Last (4, 5) ein induzierter Strom erzeugt wird.

2. Einheit nach dem vorhergehenden Anspruch, in welcher der Wasserdurchlaufbereich, der den Wärmeaustausch mit den Austauschmitteln ermöglicht, wie ein Wasserkreislauf in Richtung des Heizkörpers angeordnet ist.

3. Einheit nach dem vorhergehenden Anspruch, in welcher die Austauschmittel eine mit dem Generator (7) verbundene Ummantelung aufweisen, die den Zirkulationskreislauf umgibt.

4. Einheit nach einem der beiden vorhergehenden Ansprüche, welche einen zusätzlichen Kreislauf umfasst, der durch den Generator (7) läuft und als Abzweig von dem Abschnitt der Einlassleitung (12) für das zu erhitzende Wasser angeordnet ist.

5. Einheit nach einem der vorhergehenden Ansprüche, in welcher die Mittel zum Austausch von Wärme mit dem Wasserdurchlaufbereich im Heizkörper einen Bereich umfassen, der gegenüber dem Heizkörper, an welchen der Generator (7) angefügt ist, nicht wärmeisoliert ist.

6. Einheit nach dem vorhergehenden Anspruch, in welcher der Wassererhitzer (8) eine Klappe (9) zur Einführung von Mitteln zum Erhitzen des Wassers im Heizkörper umfasst, wobei besagte Klappe (9) mit einer Verschlussplatte (11) verschlossen wird, wobei die Verschlussplatte (11) ein Bereich ist, der gegenüber dem Heizkörper, an welchen der Generator (7) angefügt ist, nicht wärmeisoliert ist.

7. Einheit nach einem der vorhergehenden Ansprüche, in welcher die Mittel zum Austausch der Wärme mit dem Wasserdurchlaufbereich im Heizkörper ein Aufnahmegehäuse (17) des Generators (7) umfassen, das in den Heizkörper des Wassererhitzers (8) eingetaucht ist.

8. Einheit nach einem der vorhergehenden Ansprüche, in welcher mindestens ein Generator (7) mindestens zwei elektrische Ausgänge jeweils für ein induktives Modul eines bestimmten elektrischen Geräts enthält.

9. Einheit nach einem der vorhergehenden Ansprüche, in welcher der Induktor (2) und mindestens eine Last (4, 5) in den Heizkörper eingeführt werden, so dass sie unter Wasser getaucht sind.

10. Einheit nach dem vorhergehenden Anspruch, in welcher der Heizkörper eine Vielzahl nebeneinander liegender, fluidisch miteinander verbundener Längskanäle umfasst, wobei mindestens ein Längskanal das zum Erhitzen des Wassers bestimmte induktive Modul aufnimmt.

11. Einheit nach einem der Ansprüche 8 bis 10, in welcher mindestens ein induktives Modul ein zweites induktives Modul umfasst, das zur Erhitzung von mindestens einem Induktionskochfeld bestimmt ist.

12. Einheit nach einem der vorhergehenden Ansprüche, in welcher der Heizkörper quaderförmig ist.

13. Verfahren zum Kühlen von mindestens einem Stromgenerator (7) einer induktiven Vorrichtung, welche mindestens ein, für ein elektrisches Gerät bestimmtes induktives Modul umfasst, das eine Phase des Wärmeaustausches zwischen einem Wasserdurchflussbereich in oder zu einem Heizkörper eines Erhitzers (8) und mindestens einen Generator (7) umfasst, wobei diese Phase zur Kühlung von mindestens einem Generator (7) beiträgt und gleichzeitig das zusätzliche Erhitzen des Wassers des Durchgangsbereichs in oder zu dem Heizkörper des Erhitzers (8) ermöglicht, in dem mindestens ein induktives Modul zur Erhitzung des im Heizkörper des Erhitzers (8) befindlichen Wassers bestimmt ist, wobei besagtes erstes induktive Modul einen Induktor (2) und mindestens eine Last (4, 5) umfasst, wobei der Induktor (2) so gestaltet ist, dass in der Last (4, 5) ein induzierter Strom erzeugt wird.

## Claims

1. An assembly comprising a water heater (8) comprising a heating body intended to contain a volume of water, comprising an inlet pipe (12) for the water to be heated and an outlet pipe (13) for the heated water, wherein the assembly comprises at least one power generator (7), at least one first inductive module powered by the said at least one power generator so configured as to produce an induced current in an electrically conductive element, and means (11, 12, 16, 17) for exchanging heat between said at least one generator (7) and an area through which water travels towards or into the heating body, assembly wherein the at least one inductive module comprises an inductive module dedicated to the heating of the water contained in the heating body of the water heater (8), with said inductive module comprising an inductor (2) and at least one charge (4, 5), with the inductor (2) being so configured as to generate an induced current in the charge (4, 5)..

2. An assembly according to the preceding claim, wherein the area through which water travels which enables the heat exchange with the exchanging means is arranged as a water circulation circuit toward the heating body.

3. An assembly according to the preceding claim, wherein the exchanging means comprises a jacket connected to the power generator (7) and surrounding the circulation circuit.

4. An assembly according to any one of the preceding two claims, comprising a complementary circuit going through the generator (7) and arranged as a by-pass to the portion of the inlet pipe (12) for the water to be heated.

5. An assembly according to any one of the preceding claims, wherein the means for exchanging heat with the area through which water travels in the heating body comprises a non-thermally insulated area of the heating body which the generator (7) is attached to.

6. An assembly according to the preceding claim, wherein the water heater (8) comprises a hatch (9) for the introduction of means for heating the water in the heating body, with said hatch (9) being closed by a cover plate (11), with said cover plate (11) being a non-thermally insulated area of the heating body which the generator (7) is attached to.

7. An assembly according to any one of the preceding claims, wherein the means exchanging heat with the area through which water travels in the heating body comprises a generator (7) housing (17) immersed in the heating body of the water heater (8).

8. An assembly according to any one of the preceding claims, wherein said at least one generator (7) has at least two electrical outputs, with each one being intended for an inductive module dedicated to an electrical appliance.

9. An assembly according to any one of the preceding claim, wherein the inductor (2) and the at least a heating body of a water heater (8) are introduced into the heating body so as to be able to be immersed in water.

10. An assembly according to the preceding claim, wherein the heating body comprises a plurality of juxtaposed longitudinal channels fluidly connected to each other, with at least one longitudinal channel receiving the inductive module dedicated to water heating.

11. An assembly according to one of claims 8 to 10, wherein the at least one inductive module comprises a second inductive module dedicated to the heating of at least one induction cooktop.

12. An assembly of anyone of the preceding claims, wherein the heating body is a parallelepiped.

13. A method for cooling at least one power generator (7) of an inductive device, comprising at least one inductive module dedicated to an electrical appliance, comprising a step of exchanging heat between an area through which water travels into or towards a heating body of a water heater (8) and said at least one generator (7), with such step contributing to the cooling of said at least one generator (7) while enabling a make-up heating of the water in the area through which water travels towards or into the heating body of the water heater (8) and wherein the at least one inductive module comprises an inductive module dedicated to the heating of the water contained in the heating body of the water heater (8), with said inductive module comprising an inductor (2) and at least one charge (4, 5), with the inductor (2) being so configured as to generate an induced current in the charge (4, 5)..
